# EUROPEAN PATENT APPLICATION

(11) **EP 1 713 194 A1**
(43) Date of publication of application: **18.10.2006**
(21) Application number: 05008262.7
(22) Date of filing: 15.04.2005
(51) Int. Cl.: H04L 1/00

(54) **Method for updating an encoder state register**

(71) Applicant: SIEMENS AKTIENGESELLSCHAFT, 80333 München (DE)
(72) Inventor: Andersen, Soren Vang, Prof., 9000 Aalborg (DK); Praestholm, Steffen, 9000 Aalborg (DK)

(57) **Abstract**

A method of updating an encoder (203) state register (203) at a terminal (31) comprises the steps of:
- encoding at least one part (11) of a data stream to an encoded part (12) using an at least one state register (SRE);
- packing the encoded part (12) into a data packet (13) and transmitting said data packet (13) to a network (100) addressed to a destination terminal (32);
- receiving a feedback response (no ACK, NACK) originated by a network element (33; 1001) other than the destination terminal (32), the feedback response (no ACK, NACK) indicating that said network element (33; 1001) was not able to receive said data packet (13) or to forward it towards the destination terminal (32); and
- updating said at least one state register (SRE) responsive to receiving the feedback response (no ACK, NACK).

## Description

### Field of the invention

The invention relates to a terminal according to the preamble of the terminal claim, to a system comprising in addition to such a terminal also a destination terminal and a network, to a method of updating an encoder state register at a terminal, and to a new use of a feedback response.

### Background art

Despite recent developments in network technology, networks may experience problems making efficient end-to-end communication more difficult. Packet-switched networks may suffer from congestion at times. Furthermore, whenever a network comprises a radio access networks, the wireless interface may easily be disturbed again making end-to-end communication more difficult.

A type of data that is particularly vulnerable to any problems in end-to-end communication is a data stream that is encoded to a series of data packets, in particular when such a data stream should be generated and received in real time, such as would be the case for a speech or image signal, for example between a first conversation party and a second conversation party.

If a data stream that is being encoded piecewise, i.e. part by part, to a series of encoded parts, is being transmitted and the end-to-end communication for any reason becomes impossible for at least some time, leading to loss of packets between the end-to-end communication path, the quality of the received signal degrades inevitably. This degradation is particularly large when the encoding is performed using a so-called state dependent encoder, since the state register in the decoder will not be synchronized with the encoder any more, and thus the effect of packet loss propagates to subsequent frames.

There are some prior art solutions to overcome the problem. *Gournay and Lefebvre* [1] suggest a method to make use of packets that arrive late and possibly out of order. Their method repairs the damage of the state that the too-late-for-playback resulted in for the decoding of later packets. Their method succeeds only in recovering the state if the late packet arrives at the decoder before the decoding of the following packet is scheduled. If the late packet arrives later than that, the repair is only partial, and if the packet is lost, the synchronization will not be able to do anything.

*Sanneck and Le* [2] propose another approach, where encoder state information is protected by repeatedly transmitting it. Not only increasing network load, so doing increases end-to-end delay.

*Montminy and Aboulnasrl* [3] suggest a periodical resynchronization of the state information. This improves the quality problem but still fails to bring any help for decoding problems between any two subsequent synchronizations.

For video transmission, some encoder-decoder synchronization schemes has been proposed, an overview of which can be found in an article by *Girod and Färber* [6]. In general, these schemes suffer from a long feedback time, which then slows down the reaction of the synchronization mechanism and leads to prolonged error propagation.

It therefore remains an object of the invention to improve the quality of decoded reproduction of a data stream by reducing the effect of packet loss at the decoder.

### Summary of the invention

This object can be achieved with a terminal as set out in claim 1, or with a system as set out in claim 10. Furthermore, the object can be achieved as set out in method claim 13 or in use claim 22.

Dependent claims describe various advantageous embodiments of the invention.

### Advantages of the invention

If a terminal comprising a) an encoder further comprising an encoding unit adapted to encode at least one part of a data stream to an encoded part using an at least one state register to carry out the encoding, and b) a communication unit adapted to pack an encoded part into a data packet and to transmit said data packet to a network addressed to a destination terminal further comprises an updating unit adapted to update said at least one state register to be used for encoding a subsequent part of the data stream in response to the communication unit receiving a feedback response originated by a network element other than the destination terminal, the feedback response indicating that said network element was not able to receive said data packet or to forward it towards the destination terminal, the state register can be updated e.g. for indicating that the encoded part was not received by the destination terminal, without requiring a negative acknowledgement from the destination terminal. This helps to reduce network load since negative acknowledgements are not necessarily transmitted through the end-to-end communication path. More importantly, by doing so it is possible to speed up the updating of the state register, since it is no more necessary to wait for a feedback response from the destination terminal.

If said communication unit of the terminal comprises:
a first communication unit adapted to pack said encoded part into a data packet of a connectionless transfer protocol, and
a second communication unit adapted to transmit said data packet to the network, and if said second communication unit is adapted to pass said feedback response or a message derived from it to said updating unit, the transmitting of acknowledgements can be made more straightforward since feedback responses typically used in the transport layer are used to trigger the update in the encoder state register. This is favourable since the network element originating the feedback response does not need to understand the contents of the packet, i.e. there is no need to have a decoder in the network element. This simplifies the architecture of such a network, and especially the implementation of the network element.

Especially, if the updating step is performed in response to detecting a feedback response (no ACK, NACK) at least one protocol layer (303-307, 371-373) of a protocol stack in the first communication unit (309) or in the second communication unit (310), e.g. by performing cross-layer monitoring, the response time at the encoder regarding failed reception or transmittal by the other network unit can be reduced since the layer or layers comprised in the second communication unit may discover a feedback response much faster, because such layer or layers know straight away if a data packet is lost since their counterpart in the network element is responsible for the dropping of the packet, or detects the packet loss.

If the updating unit is adapted to return the state register to an initial state upon the terminal receiving the feedback response, a simple mechanism to get the encoder state register closer to the decoder state register can be achieved. The initial state may correspond to the state before encoding the very first part of the data stream, or to the state before encoding the part of the data stream that was lost.

If the encoder is further adapted: a) to compute different states for the state register for at least one encoded part that has been encoded between encoding a part to an encoded part and receiving a feedback response for a packet carrying said encoded part, b) to compute a measure representing estimated distortion at the decoder for the different states using weights generated by a network model means, and c) to use said measure to update the encoder state register, e.g. by changing indices in a fixed codebook or gains of the encoding means; and if the updating unit is adapted to update the network model means responsive to feedback response for a packet carrying an encoded part by changing a weight responsive to the feedback response, the measure needs only to be computed when feedback response is received, and the encoding means may be adapted to perform the encoding to minimize the ensemble average distortion for all states considered. This can be done irrespective of the manner in which the states are computed, e.g. whether a tree structure is used or the states are computed directly. In return to adding computational complexity, ensemble average distortion can be reduced. The network model may comprise parameters for a Hidden Markov Model, for example.

If the encoder further comprises at least a first state register representing the state of the encoder after a successful delivery of an encoded part and a second state register representing the state of the encoder after a failed delivery of an encoded part, and if the updating unit has been adapted to select which one of said first and second state registers to use for encoding a subsequent part of the data stream to an encoded part responsive to the feedback response, a convenient approach for ensuring a more correct state register after losing a packet can be achieved.

Furthermore, if such an encoder comprises more than one instances of the first state register and of the second state register in a data structure, each of the state registers describing a register state after different delivery results of previously encoded parts, having an impact on the encoding performed on subsequent parts, and if in the terminal the updating unit is adapted to select which part of said data structure to use as the state register in the encoding means, encoding of parts of the data stream may be improved in the event that loss of an encoded part is detected at the encoder after having encoded at least one subsequent part, since the propagating effect of the lost encoded part causing a state difference in the state register at the decoder to that from the encoder can be at least partly corrected.

If said data structure is a tree structure, and if the updating unit is adapted to select which branch to use as the state register in the encoding means, a particularly advantageous manner to store the state information can be achieved, since a tree structure is conceptually easy to implement, and because it can be easily ensured that all possible register states have been computed. Furthermore, discarding the wrong part of the tree helps in keeping order of the encoder state registers responsive to different delivery statuses of previous packets.

Compared to [1], correction of state information in the encoder state register can be performed for lost packets that have been reported to the encoder. The solution proposed by [1] assumes that packets will not be lost and that they arrive at the decoder as close to the scheduled regeneration of the data stream as possible.

Compared to [1], correction of state information in the encoder state register can be performed for lost packets that have been reported to the encoder. The solution proposed by [1] assumes that packets will not be lost and that they arrive at the decoder as close to the scheduled regeneration of the data stream as possible.

Compared to [2], network load may be reduced since there is no need to perform retransmissions.

Compared to [6], the response time to an unsuccessful transmitting of a packet is shorter since the updating of the encoder state can be performed faster because there is no need to wait for a feedback response from the destination terminal. Furthermore, by using the present invention, the increase in network load by collecting the feedback responses can be neglected especially whenever an appropriate information collecting scheme is used, such as in the ARQ.

Compared to [3], the state register of the encoder can be synchronized to the state register of the decoder sooner, since now the encoder state register can be updated immediately after receiving the feedback response, i.e. right after discarding or loosing a packet. Furthermore, the generation of extra distortion by unnecessarily synchronizing the encoder state register may be avoided.

### List of Figures

In the following, the preferred embodiments of the invention are explained in more detail with reference to the examples shown in Figures 2A to 4C of the appended drawings, of which:
Figure 1A shows a state-of-the-art packet-switched network comprising an encoder and a decoder;
Figure 1B illustrates the principle of operation of an encoder;
Figure 1C shows some steps performed by a state-dependent encoder;
Figure 2A shows some functional blocks of a terminal according to the invention;
Figure 2B shows a protocol-level illustration of a terminal according to the invention, together with that of a unit in the network;
Figure 3 shows an example of a data structure in which the state registers are stored;
Figure 4A illustrates an arrangement for reducing ensemble average distortion for all possible states for a given feedback response;
Figure 4B illustrates an example for obtaining a probability P((*j*)| i, i-1, i-2, i-3) used as a weight to sum a contribution of a particular register state; and
Figure 4C illustrates an embodiment of the invention where the computational complexity of the distortion ensemble average encoding for fixed codebook 1031 can be reduced.

Same reference numerals refer to similar structural elements throughout the Figures.

### Detailed description

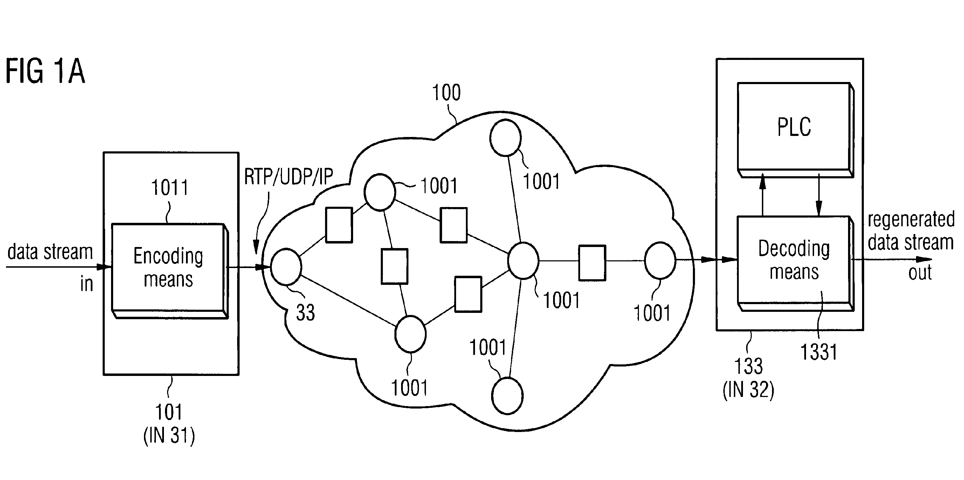

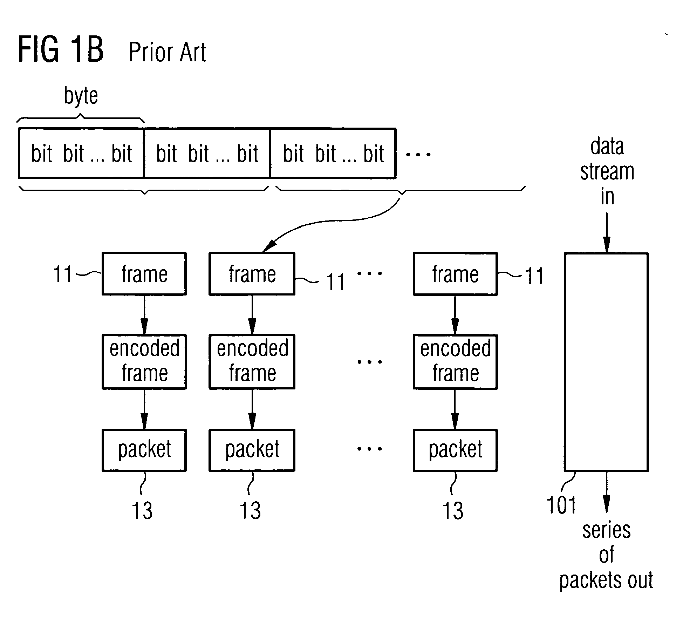

Figure 1A shows a packet-switched network 100 comprising a terminal 31 further comprising an encoder 101 and a destination terminal 32 further comprising a decoder 133. The encoding means 1011 of the encoder 101, as illustrated in Figure 1B, is adapted to encode a series of bit sequences 11, or frames, to encoded frames, which are then packed to a series of packets 13 in the terminal 31 and then transmitted to the network 100.

The terminal 31 may be adapted to transmit a data packet 13 to the network 100 over a wireless interface, such as a radio link. In this case, the network element 33 which first receives the data packet 13 is a base station, which in some networks, such as in a UMTS network, would be known as Node B.

If the terminal 31 is in connection to the network 100 over a cable (e.g. electrical or optical) connection, the network element 33 which first receives the data packet 13 may be a router.

Both base station and router are adapted to forward the data packet 13 deeper into the network 100 towards the destination terminal 32.

The packet-switched network 100 comprises a number of nodes 1001, at least some of which are inter-connected. Network element 1001 can be a router or any other suitable network element. In the case of congestion of the packet-switched network 100, the individual network elements 1001 may need to drop some data packets thus causing packet loss.

In a similar manner, packet loss may result from the wireless interface, i.e. when the base station is not able to receive the data packet from the terminal 31, or to forward it deeper into the network 100.

The decoding may in some cases be performed if the decoding means 1331 with a Packet Loss Concealment unit PLC, by using which the quality of the reconstructed signal may be improved. The Packet Loss Concealment unit PLC guesses what kind of information was lost, from which it can try to generate a signal, trying to avoid an empty gap in the regenerated data stream. The Packet Loss Concealment unit PLC is in some implementations, such as in those specified by the 3GPP, referred to as the Error Concealment Unit ECU. The Packet Loss Concealment unit PLC usually cannot completely remove the problem caused by a lost packet. The encoder 101 may comprise a representation 501 of a decoder 133 (omitted from Figure 1B), possibly including a representation of a Packet Loss Concealment unit PLC as well.

As a result of the packet loss, the decoding means 1331 in the decoder 133 at the destination terminal 32 may not be able to correctly interpret the data stream since the state register of the decoder 133 may not necessarily be in sync with the state register of the encoding means 1011.

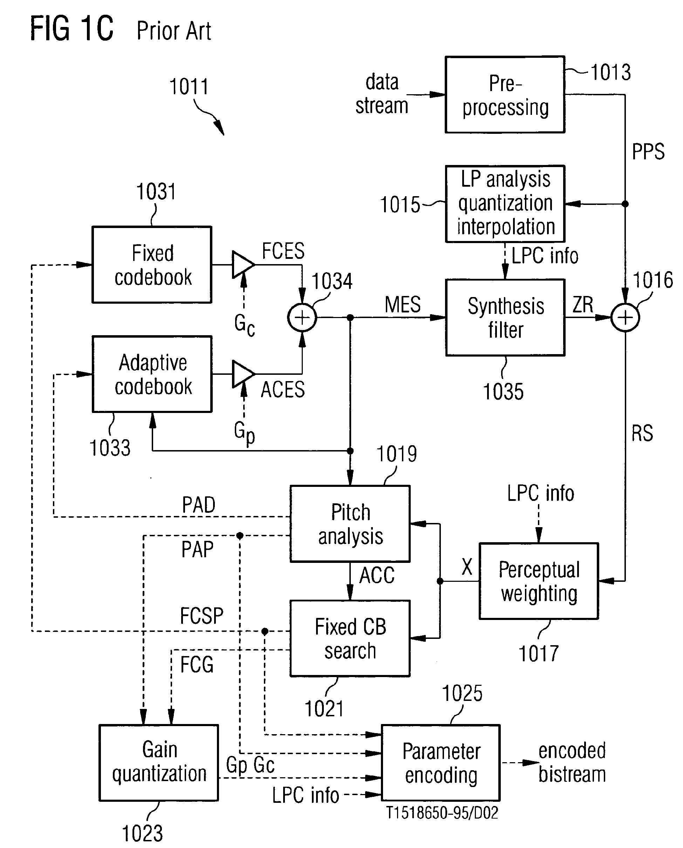

Figure 1C shows some steps performed by an encoding means 1011 which in this case is a Conjugate Structure - Algebraic-Code-Excited-Linear Prediction (CS-ACELP) encoder as defined in ITU-T G.729 specification "Coding of Speech at 8 kbit/s using CS-ACELP" from year 1996. The CS-ACELP encoder is a special case of a state-dependent encoder, but similar principles may be applied to other Code-Excited-Linear Prediction CELP encoders, and to other state-dependent encoders in general.

In the subset of embodiments of the present invention that comprise a code-excited linear predictive encoder, the data stream is pre-processed to a pre-processed signal PPS in preprocessing means 1013, and the pre-processed signal PPS is used for Linear Prediction LP analysis, quantization and interpolation in the LP analysis, quantization and interpolation means 1015, from which LPC info comprising Linear Prediction Coding coefficients is passed to synthesis filter means 1035 and to perceptual weighting means 1017.

The output of the synthesis filter, zero input response ZR, is summed with the pre-processed signal PPS in the summing device 1016, and the synthesized residual signal RS is fed to perceptual weighting means 1017 for perceptual weighting which generates target signal X from the synthesized residual signal RS and the LPC info.

The target signal X is fed to pitch analysis means 1019 for pitch analysis and to fixed codebook search means 1021 for fixed codebook search.

The output of the pitch analysis means 1019, pitch analysis delay PAD, is fed to the adaptive codebook unit 1033. The adaptive codebook unit 1033 gives a signal which after amplifying with a gain decided by gain quantization means 1023 provides an adaptive codebook excitation signal ACES. The pitch analysis means 1019 output, pitch analysis parameters PAP, is fed to gain quantization means 1023 which provides a quantized adaptive codebook gain Gp for parameter encoding means 1025 and the generation of adaptive codebook excitation signal ACES. The pitch analysis means 1019 output, (filtered) adaptive codebook contribution ACC is fed to the fixed codebook search means 1021.

The fixed codebook search means 1021 output, fixed codebook search parameters FCSP is fed to the fixed codebook means 1031. The fixed codebook means 1031 gives a signal, which after amplifying with a gain Gc decided by gain quantization means 1023 provides a fixed codebook excitation signal FCES. The fixed codebook search means 1021 output, fixed codebook gain FCG is fed to gain quantization means 1023 which provides a quantized fixed codebook gain Gc for parameter encoding means 1025 and for the generation of fixed codebook excitation signal FCES.

The fixed codebook excitation signal FCES and adaptive codebook excitation signal ACES are mixed in the mixing device 1034 which thereby forms the mixed excitation signal MES used to update adaptive codebook unit 1033, pitch analysis means 1019, and synthesis filter means 1035.

The parameter encoding means 1025 encodes pitch analysis delay PAD, LPC info, both gains Gp and Gc, and fixed codebook search parameters FCSP to an encoded bit stream.

The state register SRE of an CS-ACELP encoder comprises LP analysis, quantization and interpolation means 1015, perceptual weighting means 1017, gain quantization means 1023, adaptive codebook unit 1033, and synthesis filter means 1035

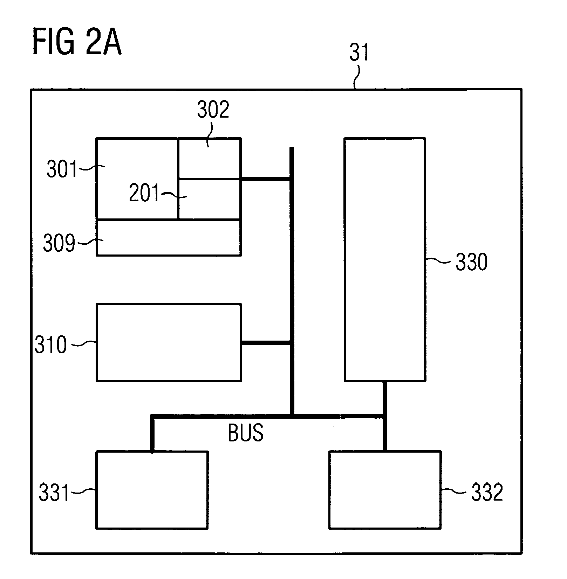

Figure 2A shows some functional blocks of a terminal 31 according to the invention. A terminal 31 for transmitting a series of data packets to a network 100 comprises a means 330, 331 adapted to generate a data stream. The terminal 31 further comprises an encoder 201 adapted to encode said data stream to a series of data packets.

The terminal 31 may comprise an application 301, communication unit 310 such as a transmitter-receiver with a corresponding protocol stack, especially adapted to receive and transmit data from and to a network 100, and means 331 for generating a data stream. The terminal 31 may further comprise means 332 for regenerating a data stream. A processing unit 330, such as a microprocessor, controls the different units.

The application 301 may be stored in memory from which it may be transferred to the processing unit 330. Instead of executing the application 301 in the processing unit 330, it may be executed in a separate application processor.

An example of means 331 for generating a data stream is a microphone connected to a digitizer. A further example of means 331 for generating a data stream is a digital camera, especially a video camera, connected to means for receiving image data from the digital camera.

An example of means 332 for regenerating a data stream is a loudspeaker, possibly comprising an amplifier, which can convert an amplified signal to voice. A further example of means 332 for regenerating a data stream is a display, with which image data, especially adapted to show a moving image, can be reproduced.

The application 301, the communication unit 310, means 331 for generating a data stream, means 332 for regenerating a data stream, and the processing unit 330 can be inter-connected with a connection bus.

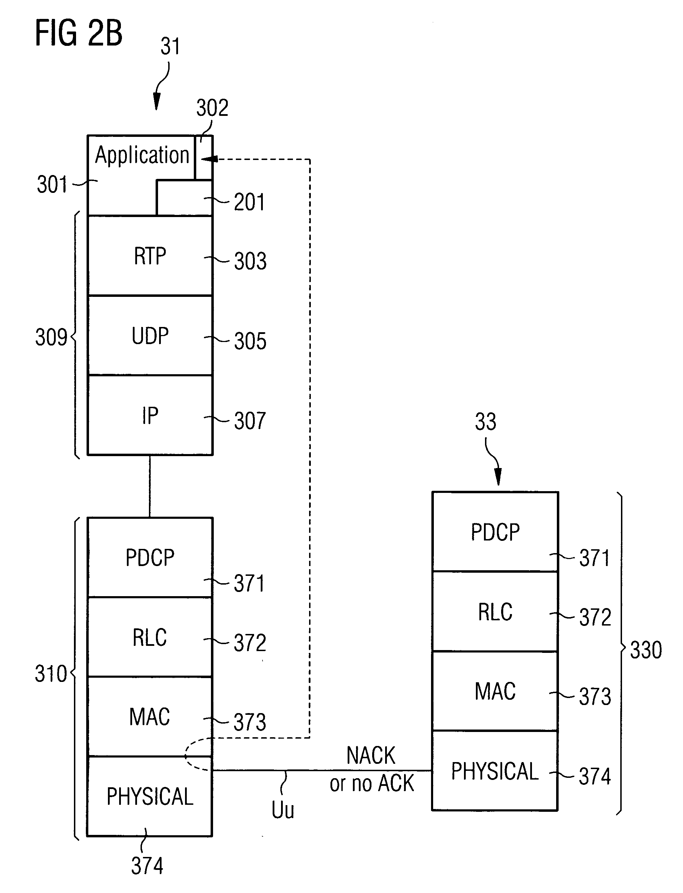

Figure 2B is a protocol-level illustration of a terminal 31 according to the invention together with that of a network element 33 which in this example is a base station.

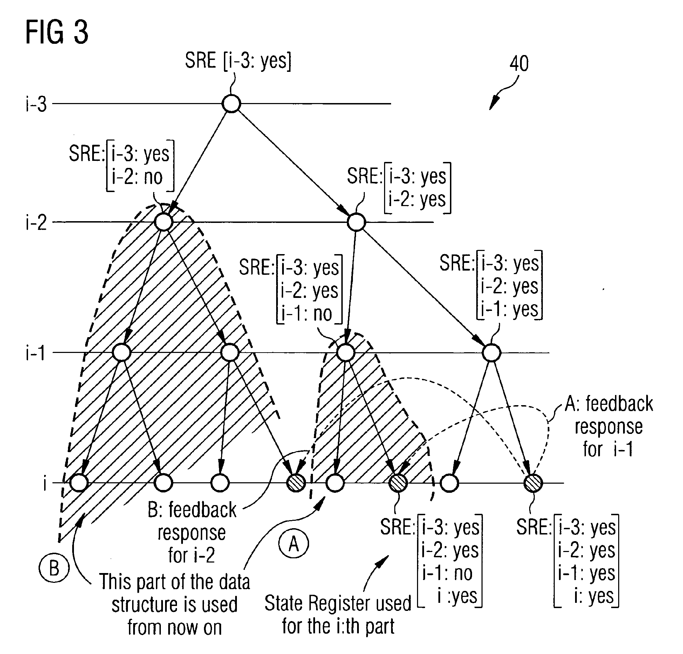

In the example shown in Figure 3B, the protocol stack of the terminal 31 comprises a communication unit 309, 310 which comprises Real-Time Protocol RTP layer 303, a User Datagram Protocol UDP layer 305, and an Internet Protocol IP layer 307, and further protocol layers 371-373 with which the terminal 31 communicates with the network 100, which in the example of Figure 3B, comprise Packet Data Convergence Protocol PDCP layer 371, Radio Link Control RLC layer 372, and Medium Access Control MAC layer 373 on top of a physical layer 374.

The state register SRE represents either the state of the encoder 101 after a successful or failed delivery of a packet 11 or a predicted version of the decoder SRE after a successful or failed delivery of a packet 11.

The terminal 31, in addition to the functional blocks shown in Figure 2A further comprises an encoder 201 comprising at least one state register SRE, and an encoding unit 1011 adapted to encode at least one part 11[i] of a data stream to an encoded part 12[i] using said at least one state register SRE to carry out the encoding. The first communication unit 309 is adapted to pack an encoded part 12[i] into a data packet 13[i], and the second communication unit 310 is adapted to transmit said data packet 13[i] to the network 100 addressed to a destination terminal 32.

The terminal 31 comprises an updating unit 302 adapted to update said at least one state register SRE to be used for encoding a subsequent part 11[i+1] of the data stream in response to the second communication unit 310 receiving a feedback response originated by a network element 33 or 1001 other than the destination terminal 32.

The feedback response indicates that said network element 33 or 1001 was not able to receive said data packet 13 or to forward it towards the destination terminal 32.

The feedback response may be a negative acknowledgement NACK, or leaving out of a positive acknowledgement (no ACK).

The protocol layers in the communication unit 309, 310 can be divided between a first communication unit 309 adapted to pack said encoded part 12 into a data packet 13 of a connectionless transfer protocol, and a second communication unit 310 adapted to transmit said data packet 13 to the network 100. If this kind of division is used, the second communication unit 310 is adapted to pass said feedback response or a message derived from it to said updating unit 302.

If the network element 31 is a base station, the communication may be carried out by using the second communication unit 310 over a wireless interface Uu. In this case, the physical layer 374 of the terminal 31 communicates with the physical layer 374 of the base station 33. The feedback response received by the terminal 31 through the physical layer 374, or any message derived therefrom, is preferably passed to the updating means 302 directly via the MAC layer 373.

If the network element 31 or 1001 is a router, the communication may be carried out by using the first communication unit 309 either alone on a physical layer or on top of some other protocol layers. This means that the first communication unit 309 and the second communication 310 unit can be replaced with one communication unit. The feedback response received by the terminal 31 through the physical layer 374, or any message derived therefrom, is preferably passed to the updating means 392 directly via any one of the layers 303 to 307 in the (first) communication unit 309.

Furthermore, it is to be noted that the protocol layers shown in Figure 2B may be changed to any other suitable protocol layers.

The application 301 which may comprise an encoder 201, may communicate with the second communication unit 310 directly, by using cross-layer communication unit comprised in the updating unit 302, or through the protocol stack. The cross-layer communication unit in the updating unit 302 is adapted to monitor one or more layers (303-307, 371-373) of the protocol stack in the first communication unit 309 or second communication unit 310, and if it detects a change caused by the layer receiving a feedback response, it signals this to the updating unit 302 which can then perform the updating of the at least one state register SRE, for example.

Before the encoding of a subsequent part 11[i+1] of the data stream, the encoder 203 may wait until the updating unit 302 has received feedback response for a data packet 13[i] carrying the previous part 11[i], or for a still earlier data packet 13[i-j], j=1, 2, 3, ... If the data packet 13[i] or the still earlier data packet 13[i-j] is lost, the updating unit 302 updates the state register SRE so that the encoding of the subsequent part 11 [i+1] can be carried out using a state register SRE most probably present in the decoder 133 at the destination terminal 32. The updating may be carried out by invoking a representation 501 of the decoder at the encoder 203, from which a resulting state information output is then used to re-synchronize encoder-decoder state information.

The updating unit 302 may be adapted to return the state register SRE to an earlier state or to the initial state upon the terminal 31 receiving the feedback response. An earlier state corresponds to a state of the state register SRE that it had prior to encoding the frame 11[i], for example the last state of the state register SRE[i-1]. The initial state corresponds to the state of the state register SRE[0] that it had before encoding the very first frame 11[1].

As an alternative to this solution, the encoder 203 may comprise at least a first state register SRE[i-1: yes] representing the state of the encoder 203 after a successful delivery of an encoded part 12[i-1], and a second state register SRE[i-1: no] representing the state of the encoder 203 after a failed delivery of an encoded part 12[i-1:no]. In this case, the updating unit 302 is preferably adapted to select which one of said state registers SRE is used for encoding a subsequent part 11[i] of the data stream to an encoded part 12[i] responsive to said feedback response.

Figure 3 illustrates this principle in more detail for an embodiment where the encoder 203 comprises more than one instances of the first state register SRE[i-1: yes; i-2: yes; SRE[i-1: yes; i-2: no] and of the second state register SRE[i-1: no; i-2: yes]; SRE[i-1: no; i-2: yes] in a data structure 40, each of the state registers SRE describing a register state after different delivery results of subsequent encoded parts 12[i-2], 12[i-1], 12[i]. Now the updating unit 302 has been adapted to select which part of said data structure 40 to use as the state register SRE in the encoding means 1011.

The data structure 40 may be as in Figure 3 be a tree structure, in which case the updating unit 302 is preferably adapted to select which branch to use as the state register SRE in the encoding means 1011.

In Figure 3, "A" denotes a case where feedback response is received for the encoded part 12[i-1] before part 11[i] has been encoded. The non-shadowed part (the shadowed part on the right hand side in Fig. 3) of the data structure 40 is discarded, and different state registers SRE are computed for the possibilities that the i:th encoded part 12[i] will be lost or successfully delivered.

"B" denotes a case where feedback response is received for the encoded part 12[i-2] after part 11[i-1] has been encoded, i.e. the feedback response can be used at earliest for encoding part 11[i]. The non-shadowed part (the shadowed part on the left hand side in Fig. 3) of the data structure 40 is discarded, and different state registers SRE are computed for the possibilities not only that that the i:th encoded part 12[i] will be lost or successfully delivered but also for the states that that i-1:th encoded part 12[i-1] will be lost or successfully delivered.

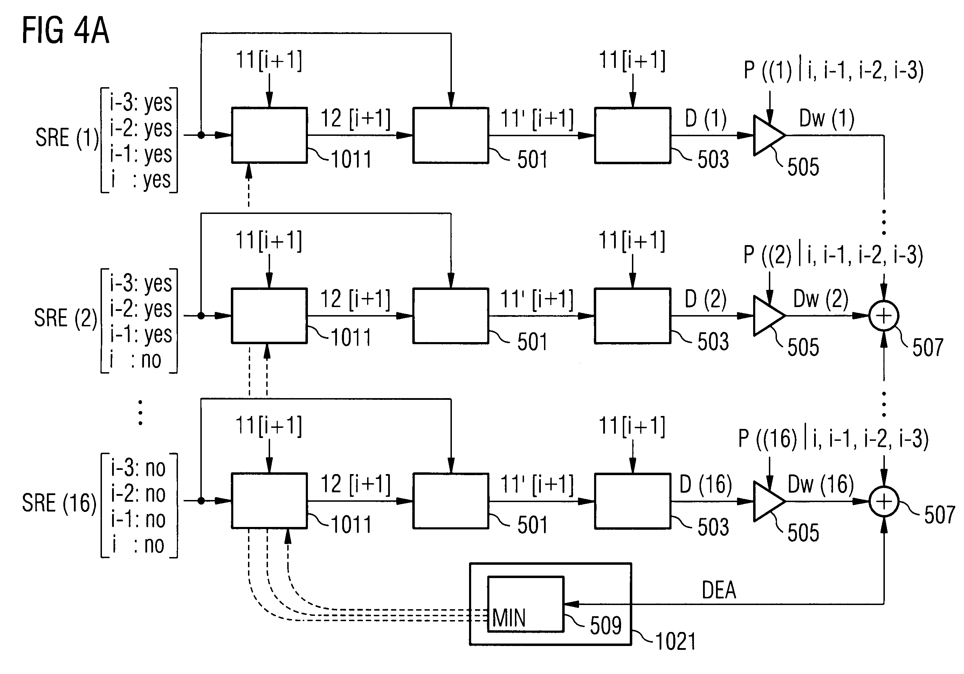

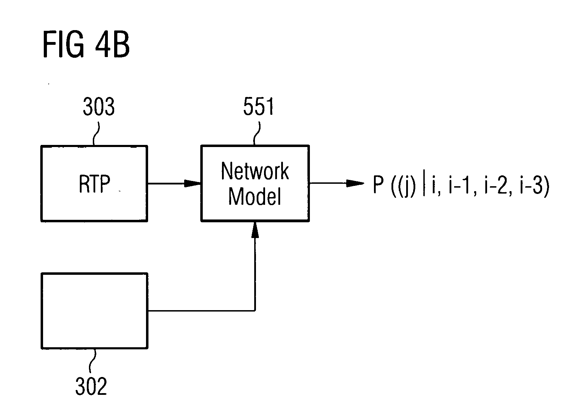

Figures 4A and 4B illustrate an embodiment of the invention, wherein the terminal furthermore comprises a means for encoding minimizing distortion ensemble average.

Some or all means adapted to perform steps of the encoding, e.g. the fixed codebook search means 1021, may be adapted to reduce the ensemble average distortion for all possible states considering the status (received/not received) due to probability for at least one previously encoded part.

Figure 4A shows an example where the encoding of part 11[i+1] to an encoded part 12[i+1] is performed by the encoding means 1011 using state register SRE(1) and a set of fixed codebook indices chosen by fixed codebook search means 1021. After this, the thus resulting encoded part 12[i+1] is decoded with a representation 501 of a decoder to a representation 11'[i+1] of the part 11[i+l] and compared with part 11[i+1] using a distortion measure means 503 to produce a measure D(1) for the distortion of the decoding of the encoded part 12[i+1]. The distortion measure means 503 may but need not be adapted to compute the measure D(1) by summing sample differences, by summing perceptually weighted sample differences, or by measuring logarithmic area ratio. The measure D(1) is weighted in weighting means 505 by the state probability P((1)|i, i-1, i-2, i-3) to weighted measure wD(1). The probability P((1)| i, i-1, i-2, i-3) represents the probability with which the state register of the decoder 133 in the destination terminal 32 corresponds to the state register SRE(1), and is influenced by at least one feedback response received by the terminal 31 and the choice of network model.

In the example of Figure 4A, the effect of 4 previous encoded parts on the current state register is considered. Therefore, there would be 16 different decoder 133 states possible. If only 3 previously encoded parts where considered, there would be eight different decoder 133 states possible, and so forth.

The weighted disturbance Dw(k) is computed in a similar manner for all k belonging [2, *max],* where max denotes the largest number of possible decoder 133 states. The weighted probabilities wD(*k*) for all k are summed in the summing means 507, i.e. weighted distortion Dw(1) is summed with the weighted distortions Dw(2), Dw(3), ..., Dw(16) corresponding to each different possible state of the state register SRE(2), SRE(3), ..., SRE(16), respectively. The distortion ensemble average DEA which corresponds to the summed distortion is fed to minimization means 509 which are updated to change the fixed codebook indices until the DEA reaches a global minimum.

Figure 4B illustrates an example for obtaining a probability P((j)| i, i-1, i-2, i-3). The probability P((j)| i, i-1, i-2, i-3) corresponds to the probability with which the state register in the decoding means 1331 at the destination terminal 32 has the same state as the state register SRE at the encoding means 1011 at the terminal 31, given feedback, network information and choice of network model. Statistics of the network 100 may be collected, e.g. by using the packet loss probability from RTP/RTCP protocol layer 303, and fed to network model means 551. Furthermore, network model means 551 are adapted to receive feedback response or a message derived therefrom from the updating means 302, and at least partly based on these inputs, the network model means 51 is adapted to compute all different probabilities P((j)| i, i-1, i-2, i-3). For the example of Figure 4A, the different probabilities would be all from P((1)| i, i-1, i-2, i-3) to P((16)| i, i-1, i-2, i-3), and they could be calculated using a suitable network model, such as Gilbert Elliot model, hidden Markov Model, etc.

The skilled person appreciates also that not only the fixed codebook indices may be encoded in this manner but also gains Gc or Gp or any other part of the encoded part.

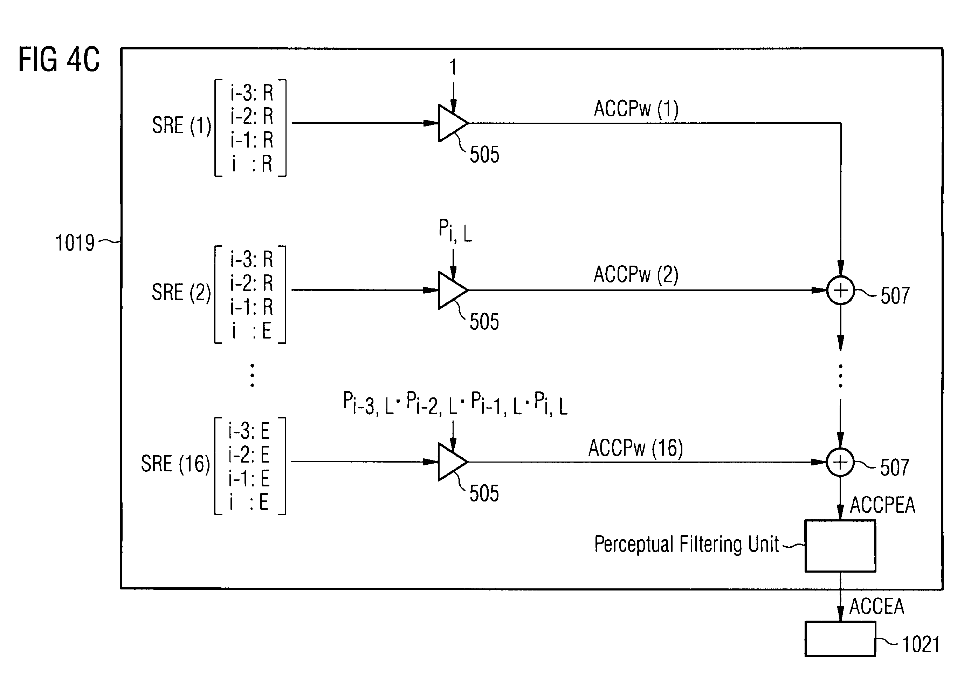

Figure 4C illustrates an embodiment of the invention where the computational complexity of the distortion ensemble average encoding for fixed codebook 1031 can be reduced. State register SRE(1) contains a basis for the adaptive codebook contribution ACC assuming that all packets 13 sent, and for which feedback response is "missing", have been received by the destination terminal 32. This adaptive codebook contribution ACC is weighted by 1, resulting in the weighted adaptive codebook contribution ACCPw(1).

State registers SRE(2) to SRE(16) contain the various kinds of errors (E) that may have been introduced if the encoding were performed assuming that all packets 13 sent, and for which feedback is "missing", have been received at the destination terminal 32. These errors are weighted by gain means 505 with their *a priori* probability, found by the network model means 551 in Figure 4B, resulting in the weighted codebook contributions ACCPw(2) to ACCPw(16). ACCPw(1) to ACCPw(16) is summed in the summing means 507 to the ensemble average adaptive codebook contribution pre-filtering ACCPEA. This ensemble average adaptive codebook contribution pre-filtering ACCPEA is then filtered perceptually in perceptual filtering means giving the ensemble average adaptive codebook contribution ACCAE which is fed to the fixed codebook search means 1021 in encoding means 1011 for normal fixed codebook search resulting in a minimization of the ensemble average distortion.

The number of the state registers SRE is adapted to the number of encoded frames 12 for which there are "missing feedbacks". That is, a feedback response may change the probability (to *a posterior* probability) of a certain error term, same as *a priori,* or it may take a second value, and error terms are therefore stored until feedback response (e.g. NACK or a timeout i.e. no ACK) is received, a posterior probability being equal a priori probability for the later case. At receiving the feedback response, the probability will no longer change and error terms may be combined, possibly with basis term, reducing the number of state registers SRE by a factor of two.

For each new encoded frame 12 the number of state registers SRE increases by a factor of 2. However, the contribution of error terms may become insignificant, e.g. the error on an error on an error on an error SRE(16) times the probability of this error term, and this term may be neglected in a trade-off between complexity and introduced distortion. This means that the number of state registers SRE will no longer grow exponentially as a function of the number of "missing feedback".

Alternative to the basis - error terms, all possible decoder states can be used in a similar framework. Furthermore, even though in the example of Figure 4C it has been assumed that a packet 13 is always received (R) at the destination terminal 32 instead of Loss (L), this could easily be reversed using adaptive codebook updating procedures for a loss and changing a priori and a posterior probabilities, e.g. P_{i,L} to P_{i,R}.

An idea underlying the invention in its different embodiments is that, even though a packet 13 is lost in the network, this information may be accessible for the terminal 31 that has transmitted the packet 13 to the network 100. By making the terminal 31 to pass this information to the encoder 201, e.g. by using an acknowledge scheme, the state register SRE in the encoder 201 may be synchronized faster.

A particularly advantageous way to obtain knowledge whether a packet 13 has been lost is to use an acknowledgement scheme of UMTS Terrestrial Radio Access Network UTRAN in the RLC/MAC/Physical layer as described in more detail in the 3GPP feasibility study 25.896 [5]. The acknowledgement scheme is originally intended for retransmission, but according to the invention, is used to update the state register SRE. In this manner it may be possible to avoid retransmission of not acknowledged packets.

Even though the invention was described using the CS-ACELP encoder as defined in ITU-T standard G.729 as an example, wherein the encoder state register SRE comprises LP analysis, quantization and interpolation means 1015, perceptual weighting means 1017, gain quantization means 1023, adaptive codebook unit 1033, and synthesis filter means 1035, the skilled person appreciates that the invention is not limited to this example but can be modified within the scope and spirit of the claims to any state-dependent encoder, especially to any state-dependent speech encoder. Instead of G.729 CS-ACELP, or in addition to it, the encoder state register can comprise means as defined for the Adaptive Multi-Rate AMR codec, or for the predictive LSF codec. Furthermore, the encoder state information may include phase, frequency, and amplitude information in a sinusoidal coder.

### References cited:

[1] P. Gournay and R. Lefebvre, "Improved packet Loss Recovery using Late Frames for Prediction Based Coders", IEEE in Proc. ICASSP, 2003.
[2] H. Sanneck and N. T. L. Le, "Speech Property-Based FEC for Internet Telephony Applications", SPIE/ACM SIGMM Proc. MMCN, 2000.
[3] C. Montminy and T. Aboulnasr, "Improving the Performance of ITU-T G.729A for VoIP", IEEE in Proc. ICME, 2000.
[4] A. Rangarajan and A. Acharya, "ERUF: Early Regulation of Unresponsive Best-Effort Traffic", IEEE Proc. ICNP'99, 1999.
[5] 3GPP 25.896, "Feasibility study for enhanced uplink for UTRA FDD" v.6.0.0, 2004.
[6] B. Girod and N. Färber, "Feedback-based error control for mobile video transmission", In the proceedings of IEEE, vol. 87, pp 1707-1773, 1999.

## Claims

1. A terminal (31) comprising:
- an encoder (203) comprising an encoding unit (1011) adapted to encode at least one part (11[i]) of a data stream to an encoded part (12[i]) using an at least one state register (SRE); and
- a communication unit (309: 303-307, 310: 371-374) adapted to pack an encoded part (12[i]) into a data packet (13[i]) and to transmit said data packet (13[i]) to a network (100) addressed to a destination terminal (32);
**characterized in that**:
the terminal (31) further comprises an updating unit (302) adapted to update said at least one state register (SRE) to be used for encoding a subsequent part (11[i+1]) of the data stream in response to the communication unit (310: 371-373) receiving a feedback response (no ACK, NACK) originated by a network element (33; 1001) other than the destination terminal (32), the feedback response (no ACK, NACK) indicating that said network element (33; 1001) was not able to receive said data packet (13) or to forward it towards the destination terminal (32).

2. A terminal (31) according to claim 1, wherein:
said communication unit (309: 303-307, 310: 371-373) of the terminal (31) comprises:
- a first communication unit (309: 303-307) adapted to pack said encoded part (12) into a data packet (13) of a connectionless transfer protocol; and
- a second communication unit (310: 371-374) adapted to transmit said data packet (13) to the network (100);
and wherein: said second communication unit (310) is adapted to pass said feedback response (no ACK, NACK) or a message derived from it to said updating unit (302).

3. A terminal (31) according to claim 2, wherein:
the updating unit (302) comprises a cross-layer communication unit adapted to monitor at least one protocol layer (303-307, 371-373) of a protocol stack in the first communication unit (309) or in the second communication unit (310), and in response to detecting a feedback response (no ACK, NACK) to signal in to the updating unit.

4. A terminal (31) according to claim 1, 2, or 3, wherein:
the updating unit (302) is adapted to return the state register (SRE) to an earlier state or to an initial state upon the terminal (31) receiving the feedback response (no ACK, NACK).

5. A terminal (31) according to claim 1, 2, or 3, wherein:
the encoder (101) is adapted:
- to compute different states (SRE(1), SRE(2), ..., SRE(16)) for the state register (SRE) for at least one encoded part (12[i-3], 12[i-2], 12[i-1], 12[i]) that has been encoded between encoding a part (11[i-4]) to an encoded part (12[i-4]) and receiving a feedback response (no ACK, NACK) for a packet (13[i-4]) carrying said encoded part (12[i-4]);
- to compute a measure (DEA) representing estimated distortion at the decoder (133) for the different states (SRE(1), SRE(2), ..., SRE(16)) using weights (P((j) | i, i-1, i-2, i-3)), for all j=1, 2, ... 16) generated by a network model means (551);
- to use said measure (DEA) to update the at least one state register (SRE), especially by changing indices in a fixed codebook (1031) or gains (Gc, Gp) of the encoding means (1011);
and wherein: said updating unit (302) is adapted to update the network model means (551) responsive to feedback response (no ACK, NACK) for a packet (13[i-4]) carrying an encoded part (12[i-4]) by changing a weight (P((j)I i, i-1, i-2, i-3)) responsive to the feedback response (no ACK, NACK).

6. A terminal (31) according to claim 1, 2, or 3, wherein:
the encoder (203) comprises at least:
- a first state register (SRE[i-1: yes]) representing the state of the encoder (203) after a successful delivery of an encoded part (12[i-1]); and
- a second state register (SRE[i-1: no]) representing the state of the encoder (203) after a failed delivery of an encoded part (12[i-1]:no);
and wherein: the updating unit (302) has been adapted to select which one of said state registers (SRE) is used for encoding a subsequent part (11[i]) of the data stream to an encoded part (12[i]) responsive to said feedback response (no ACK, NACK).

7. A terminal (31) according to claim 6, wherein:
the encoder (203) comprises: more than one instances of the first state register (SRE[i-1: yes; i-2: yes; SRE[i-1: yes; i-2: no]) and of the second state register (SRE[i-1: no; i-2: yes]; SRE[i-1: no; i-2: no]) in a data structure (40), each of the state registers (SRE) describing a register state after different delivery results of subsequent encoded parts (12[i-2], 12[i-1], 12[i];
and wherein: the updating unit (302) is adapted to select which part of said data structure (40) to use as the state register (SRE) in the encoding means (1011).

8. A terminal (31) according to claim 7, wherein:
said data structure (40) is a tree structure, and wherein:
the updating unit (302) is adapted to select which branch to use as the state register (SRE) in the encoding means (1011).

9. A terminal (31) according to any one of the preceding claims, wherein: said data stream represents audio data, especially voice.

10. A system (31, 32, 100), comprising:
- a terminal (31) according to any one of claims 1 to 9;
- a destination terminal (32) adapted to receive a data packet (13) from a network (100), the destination terminal (32) comprising a decoder (133) adapted to decode an encoded part (12) comprised in a data packet (13) received, to a representation (11) of a data stream; and
- a network (100) comprising: at least one network element (33; 1001) further comprising a communication unit (330: 371-374) adapted to receive a data packet (13) from a terminal (31) and to forward said data packet (13) in the network (100) towards the destination terminal (32), the network element (33; 1001) adapted to send to the terminal (31) a feedback response (no ACK, NACK) after having failed to receive said data packet (13) from the terminal (31) or after having failed to forward said data packet (13) to the network (100).

11. A system (31, 32, 100) according to claim 10, wherein:
the terminal (31) is a terminal (31) according to claim 2 or claim 2 and any one of claims 3 to 9; and in the network (100): said communication unit (330: 371-374) of the network element (33; 1001) is adapted to communicate with the terminal (31) through the second communication unit (310) of the terminal (31).

12. A terminal (31) or a system (31, 32, 100) according to any one of the preceding claims, wherein: said network element (33) is a base station, and said terminal (31) is adapted to communicate with said network element (33) over a wireless interface (Uu).

13. A method of updating an encoder (203) state register (203) at a terminal (31), comprising the steps of:
- encoding at least one part (11) of a data stream to an encoded part (12) using an at least one state register (SRE);
- packing the encoded part (12) into a data packet (13) and transmitting said data packet (13) to a network (100) addressed to a destination terminal (32);
- receiving a feedback response (no ACK, NACK) originated by a network element (33; 1001) other than the destination terminal (32), the feedback response (no ACK, NACK) indicating that said network element (33; 1001) was not able to receive said data packet (13) or to forward it towards the destination terminal (32); and
- updating said at least one state register (SRE) responsive to receiving the feedback response (no ACK, NACK).

14. A method according to claim 13, wherein: the terminal (31) packs said encoded part (12) into a data packet (13) of a connectionless transfer protocol and transmits said data packet (13) to the network (100) over another protocol, and wherein: the feedback response (no ACK, NACK) is received through the said other protocol, after which the feedback response (no ACK, NACK) or a message derived from it is used in the updating step.

15. A method according to claim 14, wherein: the updating step is performed in response to detecting a feedback response (no ACK, NACK) at least one protocol layer (303-307, 371-373) of a protocol stack in the first communication unit (309) or in the second communication unit (310).

16. A method according to claim 13, 14, or 15, wherein: the updating of said at least one state register (SRE) is performed by returning the state register (SRE) to an earlier state or to an initial state upon the terminal (31) receiving the feedback response (no ACK, NACK).

17. A method according to claim 13, 14, or 15, wherein: the method further comprises the steps of:
- computing different states (SRE(1), SRE(2), ..., SRE(16)) for the state register (SRE) for at least one encoded part (12[i-3], 12[i-2], 12[i-1], 12[i]) that has been encoded between encoding a part (11[i-4]) to an encoded part (12[i-4]) and receiving a feedback response (no ACK, NACK) for a packet (13[i-4]) carrying said encoded part (12[i-4]);
- computing a measure (DEA) representing estimated distortion at the decoder (133) for the different states (SRE(1), SRE(2), ..., SRE(16)) using weights (P((j)| i, i-1, i-2, i-3)), for all j=1, 2, ... 16) generated with a network model;
- using said measure (DEA) to update the at least one state register (SRE), especially by changing indices in a fixed codebook (1031) or gains (Gc, Gp) used in the encoding step;
and wherein: is the updating step, the network model is updated responsive to feedback response (no ACK, NACK) for a packet (13[i-4]) carrying an encoded part (12[i-4]) by changing a weight (P((j)| i, i-1, i-2, i-3)) responsive to the feedback response (no ACK, NACK).

18. A method according to claim 13, 14, or 15, wherein:
in carrying out the encoding step for a part (11[i-1]) of the data stream, at least a first state register (SRE[i-1: yes]) and a second state register (SRE[i-1: no]) are computed and stored, the first state register (SRE[i-1: yes]) representing the state of the encoder (203) after a successful delivery of the encoded part (12[i-1]), the second state register (SRE[i-1: no]) representing the state of the encoder (203) after a failed delivery of the encoded part (12[i]); and
- selecting which one of the at least first state register (SRE[i-1: yes]) and second state register (SRE[i-1: no]) is to be used for encoding a subsequent part (11[i]) of the data stream to an encoded part (12[i]) is performed responsive to the feedback response (no ACK, NACK).

19. A method according to claim 18, wherein: in the encoding step, more than two state registers (SRE) are computed and stored in a data structure (40), each of the state registers (SRE) describing a register state after different delivery results of subsequent encoded parts (12[i-2], 12[i-1], 12[i]); and wherein: in the selection step, responsive to the feedback response (no ACK, NACK) it is selected which of the state registers (SRE) of the data structure (40) are used for encoding.

20. A method according to claim 19, wherein:
said data structure (40) is a tree structure, and wherein:
the selecting is performed by selecting which branch is used for encoding.

21. A method according to any one of the preceding method claims, wherein: said data stream represents audio data, especially voice.

22. Use of a feedback response (no ACK, NACK) at a terminal (31) to update at least one state register (SRE) used to encode a part (11[i+1]) of a data stream to an encoded part, the feedback response (no ACK, NACK) relating to transmission or reception of a previously encoded part (11[i]) that has been sent by the terminal (31) in a data packet (13) to a network (100) to a destination terminal (32), the feedback response (no ACK, NACK) being originated by a network element (33; 1001) other than the destination terminal (32) and indicating that said network element (33; 1001) was not able to receive said data packet (13) or to forward it towards the destination terminal (32).
